(19) Europäisches Patentamt
European Patent Office
Office européen des brevets

(11) **EP 2 024 958 B1**

(12) **EUROPEAN PATENT SPECIFICATION**

(45) Date of publication and mention
of the grant of the patent:
**30.11.2011 Bulletin 2011/48**

(21) Application number: **07735663.2**

(22) Date of filing: **26.04.2007**

(51) Int Cl.:
**G09G 3/34** (2006.01)

(86) International application number:
**PCT/IB2007/051544**

(87) International publication number:
**WO 2007/132370 (22.11.2007 Gazette 2007/47)**

(54) **METHOD AND DEVICE FOR DRIVING AN IMAGE DISPLAY APPARATUS**

VORRICHTUNG UND VERFAHREN ZUR ANSTEUERUNG EINER BILDANZEIGEVORRICHTUNG

PROCÉDÉ ET DISPOSITIF POUR COMMANDER UN APPAREIL D'AFFICHAGE D'IMAGE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.05.2006 EP 06113910**

(43) Date of publication of application:
**18.02.2009 Bulletin 2009/08**

(73) Proprietor: **Koninklijke Philips Electronics N.V.**
**5621 BA Eindhoven (NL)**

(72) Inventors:
• **STESSEN, Jeroen, H., C., J.**
**5656 AA Eindhoven (NL)**
• **VAN MOURIK, Johannes, G., R.**
**5656 AA Eindhoven (NL)**

(74) Representative: **Bekkers, Joost J.J**
**Philips**
**Intellectual Property & Standards**
**P.O. Box 220**
**5600 AE Eindhoven (NL)**

(56) References cited:
**WO-A-2005/093703      WO-A-2005/119639**
**US-A1- 2002 036 615**

• **STESSEN PHILIPS APPLIED TECHNOLOGIES-DIGITAL SYSTEMS LAB-NL 5616 LW EINDHOVEN-THE NETHERLANDS J G R VAN MOURIK PHILIPS CONSUMER EL: "26.4: Algorithm for Contrast Reserve, Backlight Dimming, and Backlight Boosting on LCD" SID 2006, 2006 SID INTERNATIONAL SYMPOSIUM, SOCIETY FOR INFORMATION DISPLAY, vol. XXXVII, 24 May 2005 (2005-05-24), pages 1249-1251, XP007012707 ISSN: 0006-966X**

**Description**

FIELD OF THE INVENTION

The present invention relates in general to a method and device for driving an image display apparatus, such as for instance in a television, a monitor, etc.

In general, the invention can be applied to several types of image display apparatus having a backlight. In the following, the invention will be described for an image display device of the LCD type, but it is to be noted that it is not intended to restrict the invention to LCD image display devices.

BACKGROUND OF THE INVENTION

In an image display device, an image consists of a large number of image points, each having a specific grey value or color and a specific brightness. In a specific class of image display devices, a viewer is watching a display screen behind which a light source is arranged, the so-called backlight. The display screen comprises a plurality of pixels which can be controlled to pass light or to block light. In a specific embodiment, a pixel is implemented as a liquid crystal cell. A controller receives a video signal with image data, and on the basis of these image data it generates control signals for the liquid crystal cells. In the following, a control signal for pixel cells will be indicated as $S_{CP}$, and it will be assumed to have a minimum value 0 and a maximum value 1.

The image data can range from perfect black to perfect white. The image data are translated by the controller to a certain value for the control signal $S_{CP}$. In the case of perfect black, the brightness data in de video signal will be assumed to have a minimum value 0. It is noted that, in response to receiving a control signal $S_{CP} = 0$, the pixel cell should block all light from the backlight. In practice, however, a pixel cell will always "leak" to some extent. In the case of perfect white, the brightness data in de video signal will be assumed to have a maximum value 1. It is noted that, in response to receiving a control signal $S_{CP} = 1$, the pixel cell should pass all light from the backlight. In practice, however, a pixel cell will always reflect and/or absorb to some extent. So, generally speaking, the transmission rate of a pixel cell, indicated as H, will range from a minimum value $\alpha$ to a maximum value $\beta$, wherein $0 < \alpha < \beta < 1$.

In an actual image, the darkest portions may be lighter-than-black and the brightest portions may be darker-than-white. Thus, the transmission rate for all pixels of the image will be in a range from $\alpha^*$ to $\beta^*$, with $\alpha < \alpha^* < \beta^* < \beta$. The values $\alpha^*$ en $\beta^*$ determine the contrast of the image: a high contrast ratio means that the distance between $\alpha^*$ and $\beta^*$ is as large as possible.

Apart from the actual value of the transmission rate H, the amount of light $I_P$ emanating from a pixel, as viewed by the viewer, depends on the brightness of the backlight, in other words the intensity $I_{BL}$ of the light generated by the backlight. This might be expressed in a formula as follows:

$$I_P = H \cdot I_{BL} \tag{1}$$

Thus, with a certain setting of the intensity $I_{BL}$ of the backlight, the brightness $I_P$ of a pixel can range from $\alpha \cdot I_{BL}$ to $\beta \cdot I_{BL}$.

Under certain circumstances, it may be desirable to increase the light output. This may for instance be the case if the level of the ambient light is relatively high. Increasing the light output may be done by shifting the range $[\alpha^*, \beta^*]$ to higher values, or at least by shifting the upper limit $\beta^*$ of this range to higher values.

On the other hand, under certain other certain circumstances, it may be desirable to decrease the light output. This may for instance be the case if the level of the ambient light is relatively low. Decreasing the light output may be done by shifting the range $[\alpha^*, \beta^*]$ to lower values, or at least by shifting the lower limit $\alpha^*$ of this range to lower values.

However, increasing or decreasing the light output can also be achieved by increasing or decreasing the intensity $I_{BL}$ of the backlight.

From formula 1, it follows that the same pixel brightness $I_P$ can be achieved for different settings of the brightness $I_{BL}$ of the backlight. If the brightness $I_{BL}$ of the backlight is multiplied by a certain factor X, and simultaneously the transfer rate H of a pixel cell is divided by the same factor X, the resulting product $(X \cdot I_{BL}) \cdot (H/X) = I_P$. This fact is utilized in backlight boosting and backlight dimming.

In the case of backlight boosting, the intensity $I_{BL}$ of the backlight is increased. This can be used to enhance white parts of an image. By increasing the backlight intensity $I_{BL}$, those parts appear to be "better white" for the viewer. In grey parts of the image, the grey value can be maintained by simultaneously reducing the control signal $S_{CP}$ for the pixel cells, so that the pixels cells pass less light.

In the case of backlight dimming, the brightness $I_{BL}$ of the backlight is decreased. This can be used to enhance black parts of an image. By decreasing the backlight intensity $I_{BL}$, those parts appear to be "better black" for the viewer. In grey parts of the image, the grey value can be maintained by simultaneously increasing the control signal $S_{CP}$ for the pixel cells, so that the pixels cells pass more light.

By alternating backlight boosting and backlight dimming, the overall contrast ratio of the display device can be enhanced, and energy can be saved.

An image display device is designed for a certain nominal setting of the backlight light source. In this nominal setting, the backlight light source consumes a certain amount of power, and consequently it generates a certain amount of heat; the image display device is designed to handle this amount of heat. It should be clear that changing the contrast range $[\alpha^*, \beta^*]$ of the transmission rate of the screen pixels does not change the power consumption of the backlight. When using backlight dimming, energy is saved, but when using backlight boosting, the backlight light source produces more heat than the image display device is designed to handle. If this situation continues for a prolonged amount of time, the apparatus may become too hot. This problem might be mitigated by using additional cooling means, but this would add to the hardware costs and the energy bill of the apparatus.

Document WO-2005/119639 discloses a display device with a backlight, in which the intensity of the backlight is dimmed depending on the image content. The document further discloses that the light source may be limited depending on an average power which may be measured by taking into account actual and historical lamp operating conditions.

## SUMMARY OF THE INVENTION

The present invention proposes a method for driving an image display device using backlight dimming and backlight boosting such that, on average, the power consumed by the backlight does not exceed a predetermined power rating. In darker scenes, the backlight is dimmed and the display control signals are increased. In very bright scenes, the backlight can temporarily be boosted.

The predetermined power setting may be equal to the nominal power setting; in that case, brighter images are achieved. However, the predetermined power setting may also be lower than the nominal power setting; in that case, an overall power saving for the display apparatus is achieved.

Backlight dimming saves energy, but backlight boosting spends more energy. In order not to exceed the predetermined average, it is only possible to perform backlight boosting if it is preceded by a period of backlight dimming. It might be said that backlight dimming provides an energy reserve that can be consumed to perform backlight boosting. However, such reserve is limited. The present invention provides a method for backlight boosting which uses the energy reserve in an efficient manner and, when the energy reserve gets exhausted, reduces the excess energy consumption in an effective manner.

## BRIEF DESCRIPTION OF THE DRAWINGS

These and other aspects, features and advantages of the present invention will be further explained by the following description with reference to the drawings, in which same reference numerals indicate same or similar parts, and in which:

Figure 1 schematically illustrates a transmission characteristic of a pixel;
Figure 2 schematically illustrates backlight dimming;
Figure 3 is a block diagram schematically illustrating a display apparatus;
Figure 4 is a graph comparable to Figure 2, also including an apparatus characteristic;
Figures 5A-E are graphs illustrating a backlight dimming characteristic of a controller of the apparatus of Figure 3.

## DETAILED DESCRIPTION OF THE INVENTION

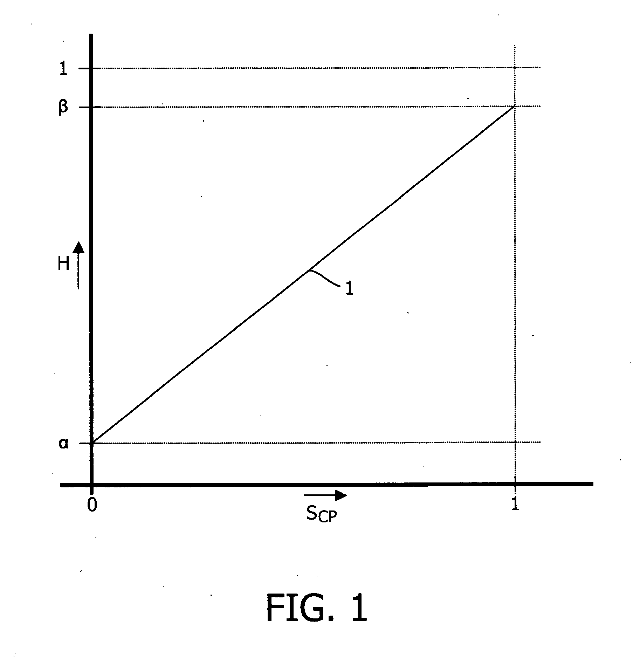

Figure 1 is a graph schematically illustrating a transmission characteristic of a pixel, for instance an LCD cell. The horizontal axis represents a control signal $S_{CP}$, ranging from 0 for minimum transmission to 1 for maximum transmission. The vertical axis represents a transmission ratio H of the pixel, ranging from 0 for perfectly blocking to 1 for 100% transmission. Line 1 shows that for control signal $S_{CP} = 0$, the transmission ratio $H(0) = \alpha > 0$, indicating that the minimum transmission of a pixel is always somewhat larger than zero. Further, line 1 shows that for control signal $S_{CP} = 1$, the transmission ratio $H(1) = \beta < 1$, indicating that the maximum transmission of a pixel is always less than 100%. The characteristic line 1 is shown as a straight line, but this is not essential.

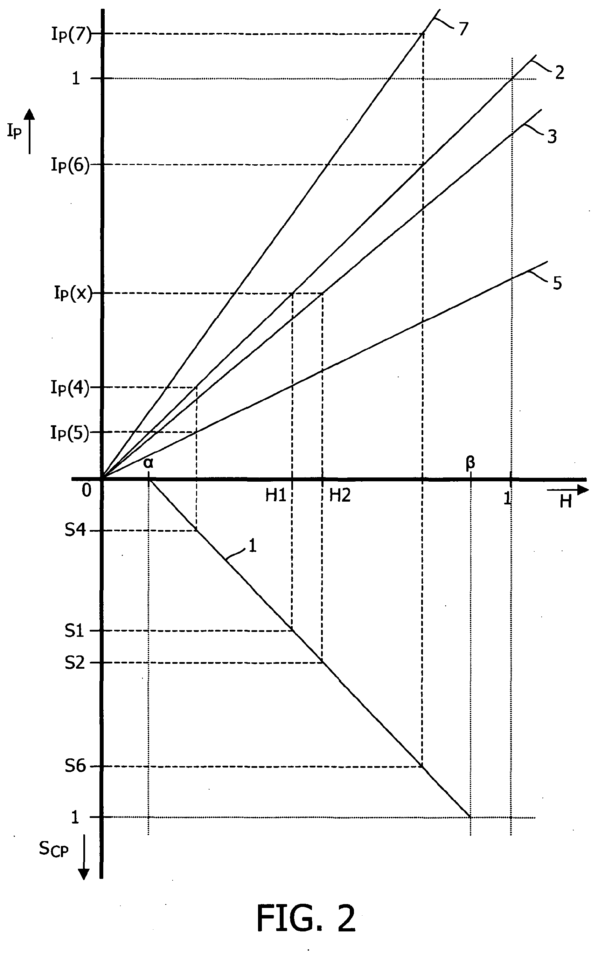

Figure 2 is a graph schematically illustrating backlight dimming. The vertical axis downwards represents the control signal $S_{CP}$, and the horizontal axis represents the transmission ratio H of the pixel, so that quadrant IV of this graph corresponds to the graph of Figure 1. The vertical axis upwards represents the amount of light $I_P$ emanating from the pixel, also indicated as pixel intensity (normalized on the nominal backlight intensity). It is assumed that the pixel intensity $I_P$ obeys the above formula (1). Thus, at a certain nominal backlight intensity $I_{BL}$, represented by line 2, if the pixel control signal $S_{CP}$ has a certain value S1, the transmission ratio H of the pixel has a certain value H1 and the pixel intensity $I_P$ has a certain value $I_P(x)$. The same value $I_P(x)$ is achieved if the backlight intensity is reduced (indicated by line 3) and the pixel control signal $S_{CP}$ is suitably increased to an increased value S2, in which case the transmission ratio H of the pixel has an increased value H2.

In Figure 2, it can also be seen that, if the pixel control signal $S_{CP}$ is maintained, reducing the backlight intensity causes a reduction of the pixel intensity $I_P$, which particularly can be used to enhance "black" performance. Assume a dark scene, associated with a certain low value S4 of the pixel control signal $S_{CP}$. With the nominal backlight intensity $I_{BL}$ (line 2), the pixel intensity $I_P$ has a relatively high value $I_P(4)$. With reduced backlight intensity $I_{BL}$ (line 5), the pixel intensity $I_P$ has a substantially lower value $I_P(5)$.

Conversely, backlight boosting results in higher pixel intensity $I_P$ when the pixel control signal $S_{CP}$ is maintained, which can be used to enhance "white" performance. Assume a bright scene, associated with a certain high value S6 of the pixel control signal $S_{CP}$. With the nominal backlight intensity $I_{BL}$ (line 2), the pixel intensity $I_P$ has a relatively low value $I_P(6)$. With increased backlight intensity $I_{BL}$ (line 7), the pixel intensity $I_P$ has a substantially higher value $I_P(7)$.

It is noted that backlight boosting and backlight dimming are known per se. Backlight dimming can for instance be performed by driving a backlight lamp with a duty cycle less than 1. Backlight boosting can for instance simply be implemented if the nominal power setting of a backlight lamp corresponds to a duty cycle less than 1: in that case, the duty cycle can be increased. If, in order to improve the display performance in the case of moving images, a backlight lamp is normally driven at a duty cycle of 30%, a boost factor of over 300% is available.

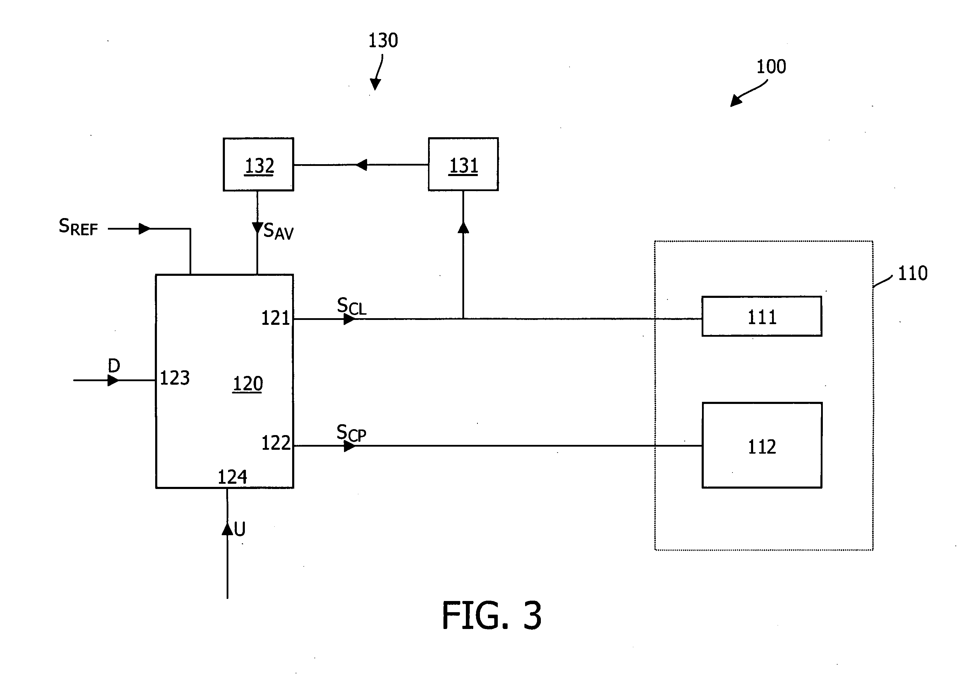

Figure 3 is a block diagram schematically illustrating a display apparatus 100, comprising a display device 110 and a controller 120. The display device 110 comprises at least one backlight lamp 111 and a display screen 112. It is noted that display devices with backlight are known per se. The backlight lamp may for instance be implemented as an array of fluorescent tube, or as an array of LEDs. The display screen may for instance be implemented as an array of LCD cells, or any other type of light valve.

The controller 120 has a light control output 121 coupled to the backlight 111, for communicating lamp control signals $S_{CL}$ to the backlight 111, and has a pixel control output 122 coupled to the display screen 112, for communicating pixel control signals $S_{CP}$ to the display screen 112. The controller 120 has an image input 123 for receiving image data D (video signals), and has a user control input 124 for receiving user control signals U. With the lamp control signals $S_{CL}$, the controller 120 controls the power setting of to the backlight 111; it is noted that the intensity or brightness of the backlight 111 is proportional to the lamp power in a good approximation.

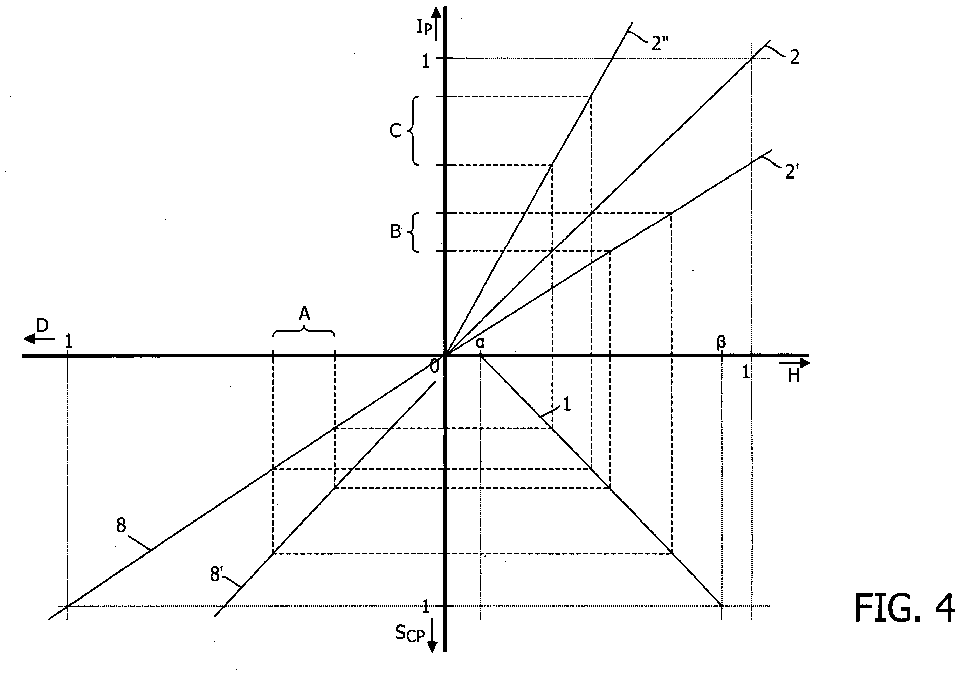

Figure 4 is a graph comparable to Figure 2, but having added a left-hand horizontal axis representing image data D, wherein D=0 represents perfect black and D=1 represents perfect white. A line 8 represents a setting of brightness and contrast. If a scene is relatively dark, its pixel data will have values relatively close to zero (range A), resulting, with the nominal backlight intensity $I_{BL}$ (line 2), in relatively low level pixel intensity (range B). In such case, the controller 120 may reduce its lamp control signals $S_{CL}$ (line 2') and simultaneously increase its pixel control signals $S_{CP}$ (line 8') to achieve a reduction in power consumption while maintaining the image brightness. It should be clear that backlight dimming in this way is only possible in the case of relatively dark scenes, so it depends on the image contents.

On the other hand, if a scene is relatively bright, the controller 120 will try to increase the brightness of the backlight by increasing its lamp control signals $S_{CL}$ (line 2"), resulting in a wider area of higher pixel intensity (range C). As mentioned above, a problem may then be that the average power of the backlight becomes too high.

The solution to this problem proposed by the present invention is described below.

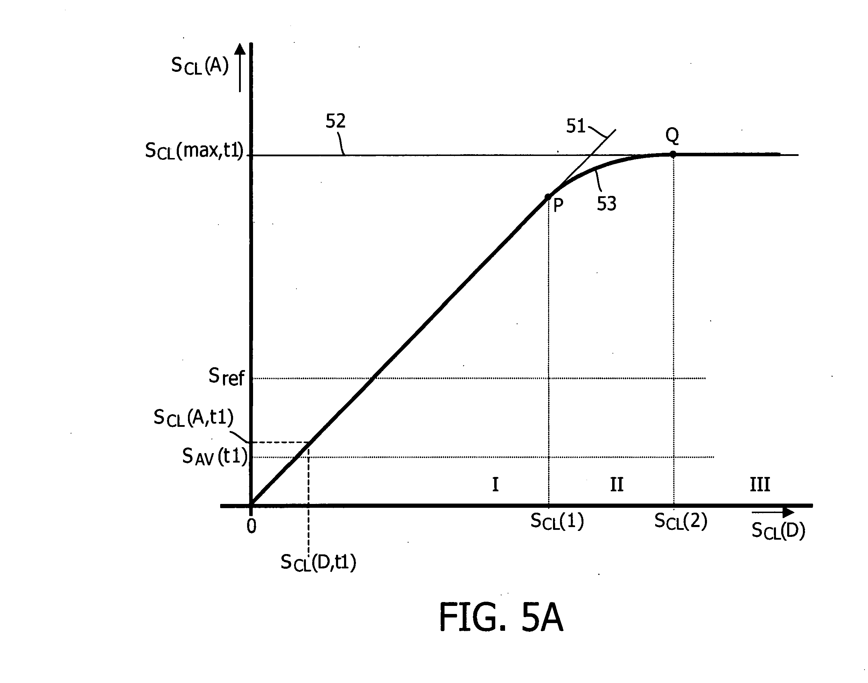

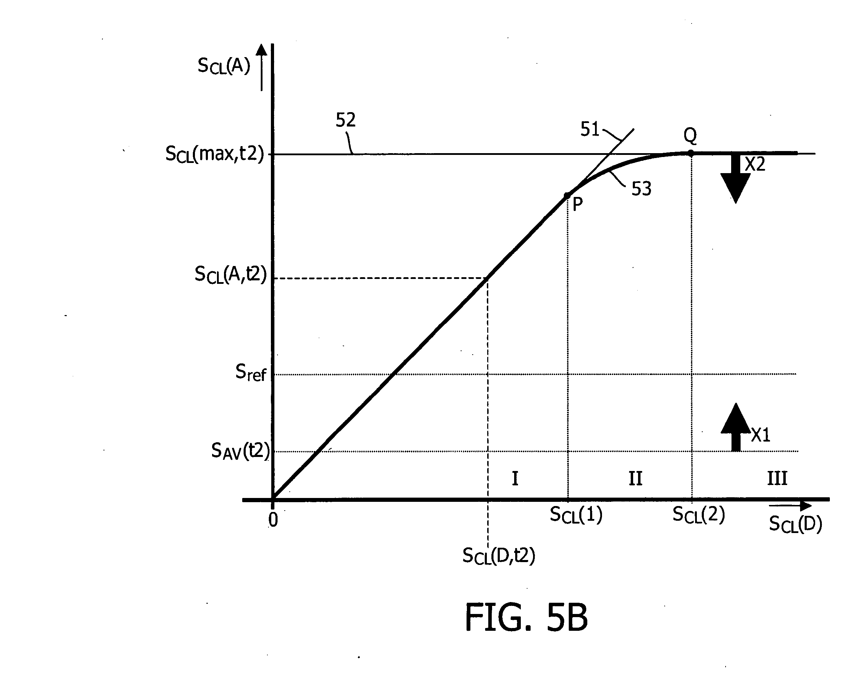

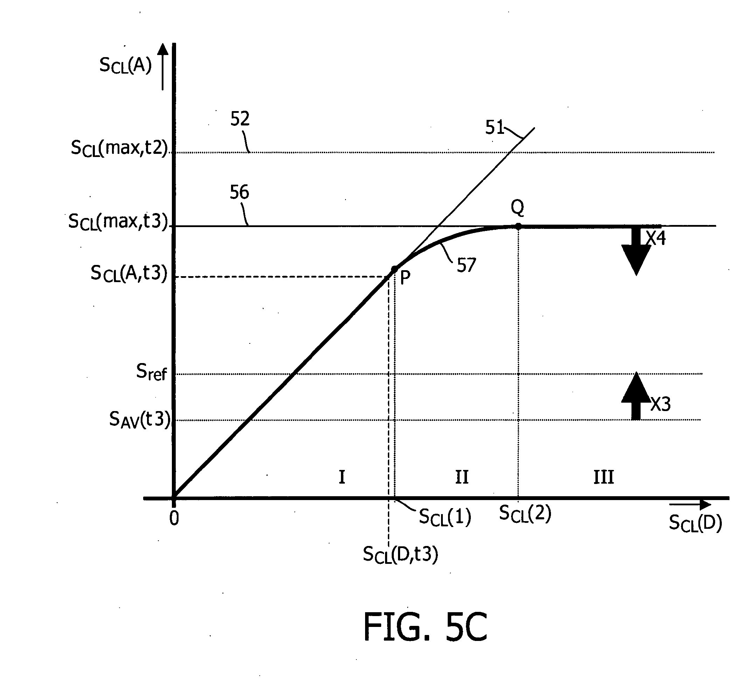

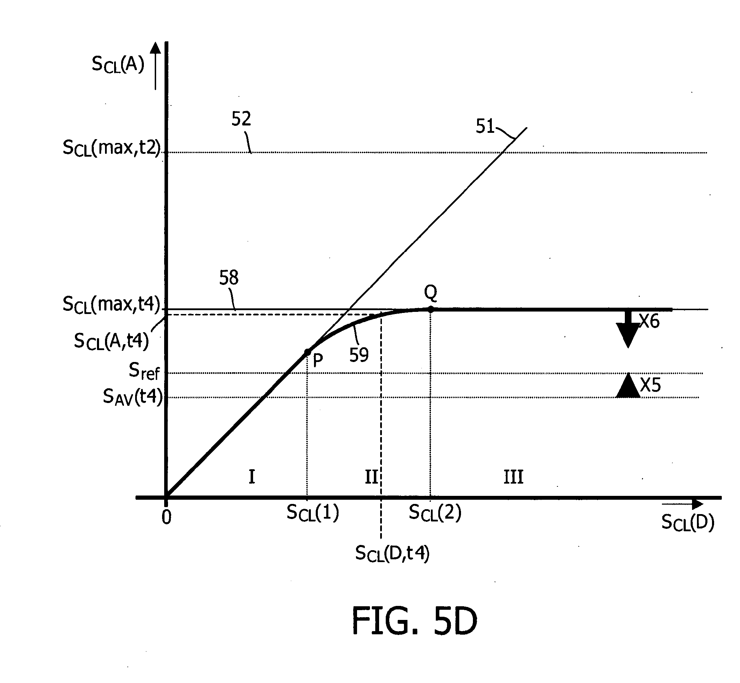

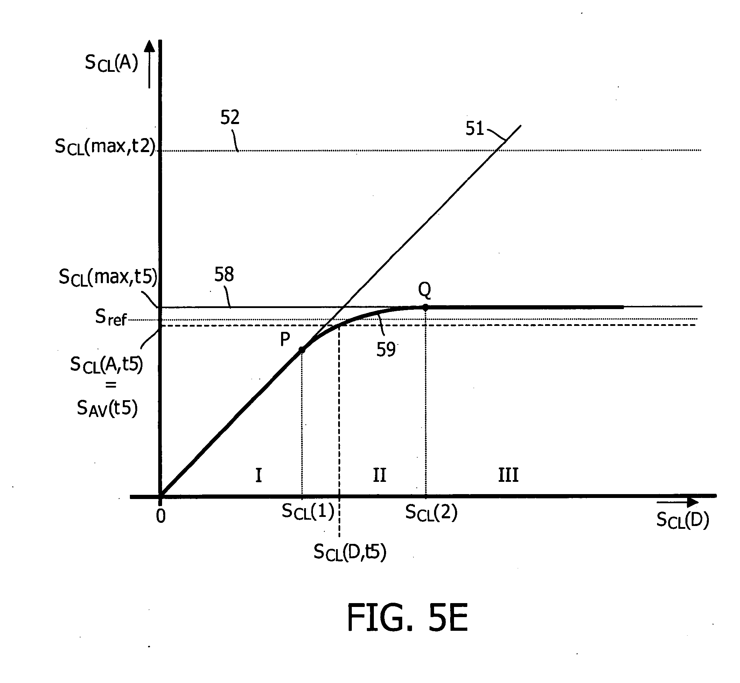

According to a first aspect of the present invention, the controller 120 sets a maximum to the backlight brightness, i.e. a maximum of the backlight power. This maximum, that will be indicated as $I_{BL}(max)$, corresponds to a maximum $S_{CL}(max)$ of the lamp control signals $S_{CL}$ to be outputted at the light control output 121. This is illustrated in Figure 5, which is a graph illustrating a characteristic of the controller 120. The horizontal axis represents the calculated lamp control signals $S_{CL}(D)$ as calculated by the controller 120 on the basis of the content of the data signals D and the user setting U alone. It is noted that the user setting U may be considered to be constant, but the content of the data signals D changes dynamically with time. The vertical axis represents the actually outputted lamp control signals $S_{CL}(A)$. The graph of Figure 5A shows a straight line 51 representing the relationship $S_{CL}(A) = \xi \cdot 4 - S_{CL}(D)$, wherein $\xi$ is a factor which, by way of preferred example, in the following will be taken to be equal to 1. The graph of Figure 5A further shows a horizontal line 52 representing the limit value $S_{CL}(max)$. Curve 53 illustrates the behavior of the controller 120. For relatively low values of the calculated control signals $S_{CL}(D)$, the controller 120 sets its output lamp control signals $S_{CL}(A)$ to be equal to the lamp control signals $S_{CL}(D)$ as calculated on the basis of the data content alone: in this region I, curve 53 follows line 51.

If the calculated control signals $S_{CL}(D)$ exceed the maximum value $S_{CL}(max)$, the controller 120 sets its output lamp control signals $S_{CL}(A)$ to be equal to the maximum value $S_{CL}(max)$; in this region III, curve 53 follows line 52.

It is possible that curve 53 follows lines 51 and 52 up till the intersection of these lines, to achieve a "hard" limitation. However, it is preferred that the limitation is softer, illustrated by a transition portion of curve 53 in the transition region II. Curve 53 follows line 51 between $S_{CL}(D) = 0$ and $S_{CL}(D) = S_{CL}(1)$, indicated by a point P, wherein $S_{CL}(1)$ is a first transition value lower than the maximum value $S_{CL}(max)$. Curve 53 follows line 52 for $S_{CL}(D) \geq S_{CL}(2)$, indicated by a point Q, wherein $S_{CL}(2)$ is a second transition value higher than the maximum value $S_{CL}(max)$. Between $S_{CL}(1)$ and $S_{CL}(2)$, curve 53 follows a path connecting points P and Q. Thus, the function that describes the relationship between $S_{CL}(A)$ and $S_{CL}(D)$ is a continuous function. Such path may be a straight line itself. Preferably, and as illustrated, such path is a curved path of which, in points P and Q, the end portions have the same direction as lines 51 and 52, respectively. The exact shape of this curved path is not essential, but it is preferred that it is a smooth shape. Preferably, the function that describes the relationship between $S_{CL}(A)$ and $S_{CL}(D)$ between $S_{CL}(1)$ and $S_{CL}(2)$ has a second derivative that is always negative.

The transition points P and Q may be calculated from the maximum value $S_{CL}(max)$ in several ways. It is possible that the transition values are calculated according to

$$S_{CL}(1) = S_{CL}(max) - \Delta1 \quad \text{and} \quad S_{CL}(2) = S_{CL}(max) + \Delta2$$

$\Delta1$ may be equal to $\Delta2$.
It is also possible that the transition values are calculated according to

$$S_{CL}(1) = S_{CL}(max)/\alpha1 \quad \text{and} \quad S_{CL}(2) = S_{CL}(max) \cdot \alpha2$$

$\alpha1$ may be equal to $\alpha2$.
According to a second aspect of the present invention, the controller 120 is provided with a feedback loop 130 comprising a power calculator 131 and an average calculator 132. The power calculator 131 has an input receiving the actual lamp control signals $S_{CL}(A)$ outputted by the controller 120, and is designed to calculate a value that is proportional to the power consumed by the backlight 111. Alternatively, it could be possible to actually measure the power consumption by the backlight 111, but that is more complicated. The average calculator 132 calculates a time-average of the power-representing value as calculated by the power calculator 131, and provides the result as an average signal $S_{AV}$ to the controller 120 at its power average input 126. The time constant of the average calculator 132 may be set in relationship with the warming-up and cooling-down properties of the display device 110; in general, the average calculator 132 may calculate the average over a time period in the order of several minutes.
In a relatively simple embodiment, the power consumed by the backlight 111 is proportional to the lamp control signals $S_{CL}(A)$; in that case, a separate power calculator may be omitted, and the average calculator 132 may simply calculate the time-average of the lamp control signals $S_{CL}(A)$. It is noted that circuitry or software for calculating a time-average are known per se.
According to a third aspect of the present invention, the controller 120 compares the average signal $S_{AV}$ with a predetermined reference value $S_{REF}$, received at a reference input 125. The reference value $S_{REF}$ may be stored in a memory (not shown) associated with the controller. The controller 120 sets the maximum value $S_{CL}(max)$ proportional to the difference $(S_{REF} - S_{AV})$: if the average signal $S_{AV}$ becomes smaller, the maximum value $S_{CL}(max)$ increases. Ultimately, the maximum value $S_{CL}(max)$ may be higher than the practical range of backlight settings. If the average signal $S_{AV}$ rises, the controller 120 decreases the maximum value $S_{CL}(max)$.
This is illustrated in an exaggerated manner in Figures 5A-E.
Figure 5A illustrates a situation at a certain time t1. An assumed value for the reference value $S_{REF}$ is indicated. Assume that in this situation the average signal $S_{AV}(t1)$ is substantially lower than the reference value $S_{REF}$, meaning that in the recent history the power consumption has been relatively low, i.e. a recent history of backlight dimming. Assume further that the calculated lamp control signal $S_{CL}(D)$ has a certain relatively low value $S_{CL}(D,t1)$, and that the actually outputted control signal $S_{CL}(A)$ has a certain value $S_{CL}(A,t1)$ close to the average value $S_{AV}(t1)$. Because the average value $S_{AV}(t1)$ is currently substantially lower than the reference value $S_{REF}$, the maximum value $S_{CL}(max)$ is high.
Figure 5B illustrates the situation at a later time t2. Assume a bright scene, so that the calculated lamp control signal $S_{CL}(D)$ has a certain relatively high value $S_{CL}(D,t2)$, although (in the example) lower than the first transition value $S_{CL}(1)$. The corresponding actually outputted control signal $S_{CL}(A,t2)$ is higher than $S_{CL}(A,t1)$ and is even higher than $S_{REF}$: the backlight is boosted.
Because the actually outputted control signal $S_{CL}(A,t2)$ is higher than $S_{AV}(t2)$, the average $S_{AV}$ is increasing (arrow X1), and consequently the maximum value $S_{CL}(max)$ is decreasing (arrow X2). Figure 5C illustrates the situation at a later time t3. It is assumed that the calculated lamp control signal $S_{CL}(D,t3)$ on time t3 is equal to $S_{CL}(D,t2)$. Figure 5C illustrates that the average value $S_{AV}(t3)$ on time t3 has increased with respect to $S_{AV}(t2)$, but it is still lower than the reference value $S_{REF}$. The decreased maximum value $S_{CL}(max,t3)$ is indicated by a horizontal line 56 lower than line 52 (shown dotted in Figure 5C), and the resulting controller characteristic is shown by a curve 57. It is noted that, with the decreasing maximum value $S_{CL}(max)$, also the first and second transition values $S_{CL}(1)$ and $S_{CL}(2)$ have decreased. In Figure 5C, the calculated lamp control signal $S_{CL}(D,t3)$ is still lower than the first transition value $S_{CL}(1)$, so $S_{CL}(A, t3)$ is equal to $S_{CL}(A,t2)$.

Because the actually outputted control signal $S_{CL}(A)$ is still higher than $S_{AV}$, the average $S_{AV}$ is still increasing (arrow X3), and consequently the maximum value $S_{CL}(max)$ is still decreasing (arrow X4). Figure 5D illustrates the situation at a still later time t4. The average value $S_{AV}(t4)$ on time t4 has increased with respect to $S_{AV}(t3)$, but it is still lower than the reference value $S_{REF}$. The decreased maximum value $S_{CL}(max,t4)$ is indicated by a horizontal line 58, and the resulting controller characteristic is shown by a curve 59. It is assumed that the calculated lamp control signal $S_{CL}(D,t4)$ on time t4 is still equal to $S_{CL}(D,t2)$. The first transition value $S_{CL}(1)$ is now lower than the calculated lamp control signal $S_{CL}(D,t4)$, and consequently the actually outputted control signal $S_{CL}(A,t4)$ is lower than $S_{CL}(A,t3)$.

Although the actually outputted control signal $S_{CL}(A,t4)$ is reduced with respect to $S_{CL}(A,t3)$, it is still higher than $S_{AV}$, so the average $S_{AV}$ is still increasing (arrow X5), and consequently the maximum value $S_{CL}(max)$ is still decreasing (arrow X6). It should be clear that, with the decreasing maximum value $S_{CL}(max)$, also the actually outputted control signal $S_{CL}(A,t4)$ is decreasing, so that the rate of increase of the average $S_{AV}$ is decreasing.

Figure 5E illustrates that a steady state is reached when the actually outputted control signal $S_{CL}(A)$ is equal to the average $S_{AV}$. When that happens, the average $S_{AV}$ will be close to but lower than $S_{REF}$. Thus, on average, the power consumed by the backlight does not exceed a predetermined power rating corresponding to $S_{REF}$.

The predetermined reference value $S_{REF}$ can be a design parameter, or a parameter that can be set by the user. In one embodiment, the predetermined reference value $S_{REF}$ can be equal to the original nominal design power of the backlight, indicated as 100%. However, in another embodiment the predetermined reference value $S_{REF}$ can be set to a lower value, for instance 70%. In that case, occasional backlight boosting to values of 100% or more can be combined with the guarantee that the overall power consumption is reduced. Of course, the amount of backlight boost, in terms of percentage or duration, depends on the history of dark scenes as well as on the setting of the reference value $S_{REF}$, as should be clear to a person skilled in the art.

When the above-mentioned steady state is reached, i.e. when the actually outputted control signal $S_{CL}(A)$ is equal to the average $S_{AV}$, backlight boosting is no longer possible. It can be said that the energy reserve is exhausted. Only when further dark scenes happen, the backlight is dimmed, as explained earlier, so that the average power consumption decreases. Simultaneously, the maximum value $S_{CL}(max)$ is increased, and backlight boosting becomes possible again. The lower the average power consumed over the recent time period is at the moment when backlight boosting is requested, the further the backlight intensity can be increased, or an the longer the increased intensity can be maintained.

By decreasing the maximum value $S_{CL}(max)$, instead of simply reducing the actual backlight intensity, the result is that the boosting of the brightest scenes is limited first, whereas the less bright scenes can be boosted longer.

It should be clear to a person skilled in the art that the present invention is not limited to the exemplary embodiments discussed above, but that several variations and modifications are possible within the protective scope of the invention as defined in the appending claims. For instance, in Figure 3 the feedback loop 130 is shown as being external to the controller 120, but the feedback loop 130 may alternatively be integral part of the controller 120.

It is noted that amending the maximum value $S_{CL}(max)$ can be done at predetermined time intervals, for instance 60 times per second, or continuously.

In the above, it was mentioned that the controller 120 sets the maximum value $S_{CL}(max)$ proportional to the difference $(S_{REF} - S_{AV})$. The function that describes the relationship between $S_{CL}(max)$ and the difference $(S_{REF} - S_{AV})$ may be a linear, first order function. However, this function may also comprise second order or higher order terms. The function may also have a zero-th order term unequal to zero.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

**Claims**

1. Method for driving an image display device (110) comprising at least one backlight lamp (111) and a display screen (112), the method comprising the steps of:

- receiving an image data signal (D);
- on the basis of the image data signal (D), calculating a content-related backlight control signal ($S_{CL}(D)$) for the backlight lamp (111) for setting the intensity of the backlight;
- generating an average signal ($S_{AV}$) that represents a time-average of the power consumed by the backlight lamp (111),
- comparing the average signal ($S_{AV}$) with a reference signal ($S_{REF}$);
- on the basis of the calculated content-related backlight control signal ($S_{CL}(D)$), taking into account the result of the said comparison, generating an actual backlight control signal ($S_{CL}(A)$) for the backlight lamp (111);
**characterized in that** the average signal ($S_{AV}$) is generated from the actual backlight control signal ($S_{CL}(A)$) the average being calculated over a time period in the order of several minutes, and the step of generating the actual backlight control signal ($S_{CL}(A)$) comprises the steps of:

-- setting a maximum value ($S_{CL}(max)$) for the actual backlight control signal ($S_{CL}(A)$);
-- defining a first transition value ($S_{CL}(1)$) and a second transition value ($S_{CL}(2)$) higher than or equal to the first transition value ($S_{CL}(1)$);
-- generating the actual backlight control signal ($S_{CL}(A)$) equal to $\xi$ times the calculated content-related backlight control signal ($S_{CL}(D)$) if the calculated content-related backlight control signal ($S_{CL}(D)$) is less than the first transition value ($S_{CL}(1)$), wherein $\xi$ is a predetermined factor;
-- generating the actual backlight control signal ($S_{CL}(A)$) equal to the maximum value ($S_{CL}(max)$) if the calculated content-related backlight control signal ($S_{CL}(D)$) is higher than the second transition value ($S_{CL}(2)$);
-- generating the actual backlight control signal ($S_{CL}A)$) to have a value lower than $\xi$ times the calculated content-related backlight control signal ($S_{CL}(D)$) and lower than the maximum value ($S_{CL}(max)$) if the calculated content-related backlight control signal ($S_{CL}(D)$) is between the first transition value ($S_{CL}(1)$) and the second transition value ($S_{CL}(2)$); wherein the maximum value ($S_{CL}(max)$) is proportional to the difference (SREF-SAV) between the reference signal and the average signal.

2. Method according to claim 1, wherein, if the image data signal (D) represents dark scenes, the backlight is dimmed, whereas if the image data signal (D) represents bright scenes, the backlight is boosted;
   wherein the amount of boost is limited such that the time-average of the power consumed by the backlight lamp (111) does not exceed a predetermined level.

3. Method according to claim 1, wherein $\xi$ is equal to 1.

4. Method according to claim 1, wherein, between the first transition value ($S_{CL}(1)$) and the second transition value ($S_{CL}(2)$), the function that describes the relationship between the actual backlight control signal ($S_{CL}(A)$) and the calculated content-related backlight control signal ($S_{CL}(D)$) has a second derivative that is always negative.

5. Method according to claim 1, wherein the function that describes the relationship between the actual backlight control signal ($S_{CL}(A)$) and the calculated content-related backlight control signal ($S_{CL}(D)$) is a continuous function.

6. Method according to claim 1, wherein the function that describes the relationship between the actual backlight control signal ($S_{CL}(A)$) and the calculated content-related backlight control signal ($S_{CL}(D)$) can be continuously differentiated.

7. Method according to claim 1, wherein, at a certain time (t1), the average signal ($S_{AV}$) represents the power actually consumed by the backlight lamp (111) averaged over a time period with a predetermined duration immediately before said time (t1).

8. Method according to claim 1, further comprising the steps of:

   - on the basis of the image data signal (D), generating a screen control signal ($S_{CP}$) for the display screen (112);
   - if the screen control signals ($S_{CP}$) of an image are within a range lower than a maximally possible value, increasing the screen control signals ($S_{CP}$) while decreasing the calculated backlight control signal ($S_{CL}(D)$).

9. Display apparatus (100), comprising an image display device (110) including at least one backlight lamp (111) and a display screen (112), the apparatus comprising a controller (120) having:

   - a light output (121) coupled to the backlight lamp (111) for providing an actual backlight control signal ($S_{CL}(A)$),

- a pixel control output (122) coupled to the display screen (112) for providing pixel control signals ($S_{CP}$);
- an image input (123) for receiving an image data signal (D),
- a reference input (125) for receiving a reference value ($S_{REF}$),
- a power average input (126) for receiving an average signal ($S_{AV}$);

the apparatus further comprising a feedback loop (130) having its input coupled to the light output (121) of the controller (120) and having its output coupled to the power average input (126) of the controller (120), the feedback loop including means (131, 132) for calculating a signal ($S_{AV}$) representing a time-average of the power consumption by the backlight (111); wherein the controller is designed to execute the method of any of claims 1-8.

**Patentansprüche**

1. Verfahren zur Ansteuerung einer Bildwiedergabeanordnung (110) mit wenigstens einer Hintergrundlichtlampe (111) und einem Wiedergabeschirm (112), wobei das Verfahren die nachfolgenden Verfahrensschritte umfasst:

   - das Empfangen eines Bilddatensignals (D);
   - das Berechnen eines inhaltbezogenen Hintergrundlichtsteuersignals ($S_{CL}$(D)) für die Hintergrundlichtlampe (111) auf Basis des Bilddatensignals (D) zur Einstellung der Intensität des Hintergrundlichtes;
   - das Erzeugen eines Durchschnittssignals ($S_{AV}$), das ein Zeitmittel der von der Hintergrundlichtlampe (111) verbrauchten Leistung darstellt;
   - das Vergleichen des Durchschnittssignals ($S_{AV}$) mit einem Bezugssignal ($S_{REF}$);
   - unter Berücksichtigung des Ergebnisses des genannten Vergleichsvorgangs auf Basis des berechneten inhaltbezogenen Hintergrundlichtsteuersignals ($S_{CL}$(D)) das Erzeugen eines wirklichen Hintergrundlichtsteuersignals ($S_{CL}$(A)) für die Hintergrundlichtlampe (111), **dadurch gekennzeichnet, dass** das Durchschnittssignal ($S_{AV}$) aus dem wirklichen Hintergrundlichtsteuersignal ($S_{CL}$(A)) berechnet wird und der Mittelwert über eine Zeitperiode von einigen Minuten berechnet wird und der Verfahrensschritt der Erzeugung des wirklichen Hintergrundlichtsteuersignals ($S_{CL}$(A)) die nachfolgenden Verfahrensschritte umfasst:

   -- das Einstellen eines Maximalwertes ($S_{CL}$(max)) für das wirkliche Hintergrundlichtsteuersignal ($S_{CL}$(A));
   -- das Definieren eines ersten Übergangswertes ($S_{CL}$(1)) und eines zweiten Übergangswertes ($S_{CL}$(2)), der höher ist als der erste Übergangswert ($S_{CL}$(1)), oder diesem Wert entspricht;
   -- das Erzeugen des wirklichen Hintergrundlichtsteuersignals ($S_{CL}$(A)) gleich dem ζ-fachen berechneten inhaltbezogenen Hintergrundlichtsteuersignal ($S_{CL}$(D)) wenn das berechnete inhaltbezogene Hintergrundlichtsteuersignal ($S_{CL}$(D)) kleiner ist als der erste Übergangswert ($S_{CL}$(1)), wobei ζ ein vorbestimmter Faktor ist;
   -- das Erzeugen des wirklichen Hintergrundlichtsteuersignals ($S_{CL}$(A)) gleich dem Maximalwert ($S_{CL}$(max)), wenn das berechnete inhaltbezogene Hintergrundlichtsteuersignal ($S_{CL}$(D)) höher ist als der zweite Übergangswert ($S_{CL}$(2)),
   -- das Berechnen des wirklichen Hintergrundlichtsteuersignals ($S_{CL}$(A)) derart, dass dieses Signal einen Wert niedriger als der ζ-fache berechnete inhaltbezogene Hintergrundlichtsteuersignal ($S_{CL}$(D)) und niedriger als der Maximalwert ($S_{CL}$(max)) hat, wenn das berechnete inhaltbezogene Hintergrundlichtsteuersignal ($S_{CL}$(D)) zwischen dem ersten Übergangswert ($S_{CL}$(1)) und dem zweiten Übergangswert ($S_{CL}$(2)) liegt;

   wobei der Maximalwert ($S_{CL}$(max)) proportional zu der Differenz (SREF-SAV) zwischen dem Bezugssignal und dem Durchschnittssignal ist.

2. Verfahren nach Anspruch 1, wobei, wenn das Bilddatensignal (D) dunkle Szenen zeigt, das Hintergrundlicht gedämpft wird, während wenn das Bilddatensignal (D) helle Szenen zeigt, das Hintergrundlicht verstärkt wird; wobei das Maß der Verstärkung derart begrenzt wird, dass das Zeitmittel der von der Hintergrundlichtlampe (111) verbrauchten Leistung einen vorbestimmten Pegel nicht übersteigt.

3. Verfahren nach Anspruch 1, wobei ζ gleich 1 ist.

4. Verfahren nach Anspruch 1, wobei zwischen dem ersten Übergangswert ($S_{CL}$(1)) und dem zweiten Übergangswert ($S_{CL}$(2)) die Funktion, welche die Beziehung zwischen dem wirklichen Hintergrundlichtsteuersignal ($S_{CL}$(A)) und dem berechneten inhaltbezogenen Hintergrundlichtsteuersignal ($S_{CL}$(D)) beschreibt, eine zweite Ableitung hat, die immer negativ ist.

**5.** Verfahren nach Anspruch 1, wobei die Funktion, welche die Beziehung zwischen dem wirklichen Hintergrundlichtsteuersignal ($S_{CL}$(A)) und dem berechneten inhaltbezogenen Hintergrundlichtsteuersignal ($S_{CL}$(D)) eine kontinuierliche Funktion ist.

**6.** Verfahren nach Anspruch 1, wobei die Funktion, welche die Beziehung zwischen dem wirklichen Hintergrundlichtsteuersignal ($S_{CL}$(A)) und dem berechneten inhaltbezogenen Hintergrundlichtsteuersignal ($S_{CL}$(D)) kontinuierlich differenziert werden kann.

**7.** Verfahren nach Anspruch 1, wobei zu einem bestimmten Zeitpunkt (t1) das Durchschnittssignal ($S_{AV}$) die von der Hintergrundlichtlampe (111) wirklich verbrauchte Leistung, gemittelt über eine Zeitperiode mit einer vorbestimmten Dauer unmittelbar vor dem genannten Zeitpunkt (t1), darstellt.

**8.** Verfahren nach Anspruch 1, wobei das Verfahren weiterhin die nachfolgenden Verfahrensschritte umfasst:

  - das Erzeugen eines Schirmsteuersignals ($S_{CP}$) für den Wiedergabeschirm, und zwar auf Basis des Bilddatensignals (D);
  - das Steigern der Schirmsteuersignale ($S_{CP}$) und das Verringern des berechneten Hintergrundlichtsteuersignals ($S_{CL}$(D) wenn die Schirmsteuersignale ($S_{CP}$) des Bildes in einem Gebiet niedriger als ein maximal möglicher Wert liegen.

**9.** Wiedergabegerät (100) mit einer Bildwiedergabeanordnung (110) mit wenigstens einer Hintergrundlichtlampe (111) und einem Wiedergabeschirm (112), wobei das Gerät einen Controller (120) hat, der Folgendes umfasst:

  - einen mit der Hintergrundlichtlampe (111) gekoppelte Lichtausgang (121) zum Liefern eines wirklichen Hintergrundlichtsteuersignals ($S_{CL}$(A)),
  - einen mit dem Wiedergabeschirm (112) gekoppelten Pixelsteuerausgang (122) zum Liefern von Pixelsteuersignalen ($S_{CP}$);
  - einen Bildeingang (123) zum Empfangen eines Bilddatensignals (D),
  - einen Bezugswerteingang (125) zum Empfangen eines Bezugswertes ($S_{REF}$),
  - einen Leistungsmittelwerteingang (126) zum Empfangen eines Durchschnittssignals ($S_{AV}$);

  wobei das Gerät weiterhin eine Rückkopplungsschleife (130) aufweist, deren Eingang mit dem Lichtausgang (121) des Controllers (120) und deren Ausgang mit dem Leistungsmittelwerteingang (126) des Controllers (120) gekoppelt ist, wobei die Rückkopplungsschleife Mittel (131, 132) zum Berechnen eines Signals ($S_{AV}$) aufweist, das ein Zeitmittel der Leistungsaufnahme de3s Hintergrundlichtes (111) darstellt;
  wobei der Controller dazu vorgesehen ist, das Verfahren nach einem der Ansprüche 1 - 8 durchzuführen.

## Revendications

**1.** Procédé qui est destiné à commander un dispositif d'affichage d'image (110) comprenant au moins une lampe d'éclairage à contre-jour (111) et un écran d'affichage (112), le procédé comprenant les étapes suivantes consistant à :

  - recevoir un signal de données d'image (D) ;
  - calculer, sur la base du signal de données d'image (D), un signal de commande d'éclairage à contre-jour lié au contenu ($S_{CL}$(D)) pour la lampe d'éclairage à contre-jour (111) afin de régler l'intensité de l'éclairage à contre-jour ;
  - générer un signal moyen ($S_{AV}$) qui représente une moyenne temporelle de la puissance qui est consommée par la lampe d'éclairage à contre-jour (111),
  - comparer le signal moyen ($S_{AV}$) à un signal de référence ($S_{REF}$) ;
  - prendre en compte, sur la base du signal de commande d'éclairage à contre-jour lié au contenu calculé ($S_{CL}$(D)), le résultat de ladite comparaison en générant un signal de commande d'éclairage à contre-jour réel ($S_{CL}$(A)) pour la lampe d'éclairage à contre-jour (111), **caractérisé en ce que** le signal moyen ($S_{AV}$) est généré à partir du signal de commande d'éclairage à contre-jour réel ($S_{CL}$(A)), la moyenne étant calculée au bout d'une période de temps de l'ordre de plusieurs minutes, et **caractérisé en ce que** l'étape de génération du signal de commande d'éclairage à contre-jour réel ($S_{CL}$(A)) comprend les étapes suivantes consistant à :

-- régler une valeur maximale ($S_{CL}$(max)) pour le signal de commande d'éclairage à contre-jour réel ($S_{CL}$(A)) ;

-- définir une première valeur de transition ($S_{CL}$(1)) et une seconde valeur de transition ($S_{CL}$(2)) qui est supérieure ou égale à la première valeur de transition ($S_{CL}$(1)) ;

-- générer le signal de commande d'éclairage à contre-jour réel ($S_{CL}$(A)) qui est égal à ξ fois le signal de commande d'éclairage à contre-jour lié au contenu calculé ($S_{CL}$(D)) si le signal de commande d'éclairage à contre-jour lié au contenu calculé ($S_{CL}$(D)) est inférieur à la première valeur de transition ($S_{CL}$(1)) où ξ est un facteur prédéterminé ;

-- générer le signal de commande d'éclairage à contre-jour réel ($S_{CL}$(A)) qui est égal à la valeur maximale ($S_{CL}$(max)) si le signal de commande d'éclairage à contre-jour lié au contenu calculé ($S_{CL}$(D)) est supérieur à la seconde valeur de transition ($S_{CL}$(2)) ;

-- générer le signal de commande d'éclairage à contre-jour réel ($S_{CL}$(A)) de manière à présenter une valeur qui est inférieure à ξ fois le signal de commande d'éclairage à contre-jour lié au contenu calculé ($S_{CL}$(D)) et qui est inférieure à la valeur maximale si le signal de commande d'éclairage à contre-jour lié au contenu calculé ($S_{CL}$(D)) se situe dans la gamme comprise entre la première valeur de transition ($S_{CL}$(1)) et la seconde valeur de transition ($S_{CL}$(2)) où la valeur maximale ($S_{CL}$(max)) est proportionnelle à la différence ($S_{REF}$-$S_{AV}$) entre le signal de référence et le signal moyen.

2. Procédé selon la revendication 1, dans lequel, si le signal de données d'image (D) représente des scènes sombres, l'éclairage à contre-jour est atténué alors que, si le signal de données d'image (D) représente des scènes claires, l'éclairage à contre-jour est intensifié ;

dans lequel la quantité d'intensification est limitée de telle façon que la moyenne temporelle de la puissance qui est consommée par la lampe d'éclairage à contre-jour (111) ne dépasse pas un niveau prédéterminé.

3. Procédé selon la revendication 1, dans lequel ξ est égal à 1.

4. Procédé selon la revendication 1, dans lequel, entre la première valeur de transition ($S_{CL}$(1)) et la seconde valeur de transition ($S_{CL}$(2)), la fonction qui décrit la relation entre le signal de commande d'éclairage à contre-jour réel ($S_{CL}$(A)) et le signal de commande d'éclairage à contre-jour lié au contenu calculé ($S_{CL}$(D)) présente une seconde dérivée qui est toujours négative.

5. Procédé selon la revendication 1, dans lequel la fonction qui décrit la relation entre le signal de commande d'éclairage à contre-jour réel ($S_{CL}$(A)) et le signal de commande d'éclairage à contre-jour lié au contenu calculé ($S_{CL}$(D)) est une fonction continue.

6. Procédé selon la revendication 1, dans lequel la fonction qui décrit la relation entre le signal de commande d'éclairage à contre-jour réel ($S_{CL}$(A)) et le signal de commande d'éclairage à contre-jour lié au contenu calculé ($S_{CL}$(D)) peut être différenciée continûment.

7. Procédé selon la revendication 1, dans lequel, à un certain moment (t1), le signal moyen ($S_{AV}$) représente la puissance qui est réellement consommée par la lampe d'éclairage à contre jour (111) qui est moyennée au bout d'une période de temps avec une durée prédéterminée immédiatement avant ledit temps (t1).

8. Procédé selon la revendication 1, comprenant en outre les étapes suivantes consistant à :

- générer, sur la base du signal de données d'image (D), un signal de commande d'écran ($S_{CP}$) pour l'écran d'affichage (112) ;
- augmenter, si les signaux de commande d'écran ($S_{CP}$) d'une image se situent dans une gamme qui est inférieure à une valeur maximalement possible, les signaux de commande d'écran ($S_{CP}$) tout en diminuant le signal de commande d'éclairage à contre-jour calculé ($S_{CL}$(D)).

9. Appareil d'affichage (100) comprenant un dispositif d'affichage d'image (110) comprenant au moins une lampe d'éclairage à contre-jour (111) et un écran d'affichage (112), l'appareil comprenant un contrôleur (120) qui présente :

- une sortie de lumière (121) qui est couplée à la lampe d'éclairage à contre-jour (111) pour fournir un signal de commande d'éclairage à contre-jour réel ($S_{CL}$(A)) ;
- une sortie de commande de pixel (122) qui est couplée à l'écran d'affichage (112) pour fournir des signaux de commande de pixel ($S_{CP}$) ;

- une entrée d'image (123) qui est destinée à recevoir un signal de données d'image (D) ;
- une entrée de référence (125) qui est destinée à recevoir une valeur de référence ($S_{REF}$) ;
- une entrée moyenne de puissance (126) qui est destinée à recevoir un signal moyen ($S_{AV}$) ;

l'appareil comprenant en outre une boucle de rétroaction (130) dont l'entrée est couplée à la sortie de lumière (121) du contrôleur (120) et dont la sortie est couplée à l'entrée moyenne de puissance (126) du contrôleur (120), la boucle de rétroaction comprenant des moyens (131, 132) pour calculer un signal ($S_{AV}$) qui représente une moyenne temporelle de la puissance qui est consommée par l'éclairage à contre-jour (111) où le contrôleur est conçu pour mettre en oeuvre le procédé selon l'une quelconque des revendications précédentes 1 à 8.

FIG. 1

FIG. 2

FIG. 3

EP 2 024 958 B1

FIG. 4

EP 2 024 958 B1

FIG. 5A

EP 2 024 958 B1

FIG. 5B

FIG. 5C

EP 2 024 958 B1

FIG. 5D

FIG. 5E

EP 2 024 958 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005119639 A